# EUROPÄISCHE PATENTANMELDUNG

(11) **EP 3 067 299 A1**
(43) Veröffentlichungstag der Anmeldung: **14.09.2016**
(21) Anmeldenummer: 16158025.3
(22) Anmeldetag: 01.03.2016
(51) Int. Cl.: B65G 39/073, B65G 45/10

(54) **SELBSTREINIGENDE BANDTROMMEL**

(30) Priorität: 13.03.2015 DE 102015003155
(71) Anmelder: noltewerk GmbH & Co KG, 48268 Greven (DE)
(72) Erfinder: van Üüm, Christoph, 48712 Gescher (DE)
(74) Vertreter: Lenzing Gerber Stute

(57) **Zusammenfassung**

Die Erfindung betrifft eine Bandtrommel (1) für Förderbänder mit einer Längsachse (3), einer entlang der Längsachse (3) angeordneten Welle und einem konzentrisch zur Welle angeordneten Trommelmantel (2), wobei der Trommelmantel (2) Öffnungen (5) zum Durchlassen von Fördergut in einen von dem Trommelmantel (2) umgebenen Innenraum aufweist, und mit einem ersten und einem zweiten Stopfen (4), die den Trommelmantel (2) an einem ersten Ende und einem zweiten Ende jeweils mit der Welle verbinden, wobei der Trommelmantel (2) ausschließlich über den ersten und den zweiten Stopfen (4) mit der Welle verbunden ist.

## Beschreibung

Die vorliegende Erfindung betrifft eine Bandtrommel mit den Merkmalen des Oberbegriffs des Anspruchs 1.

Bei Förderbändern zur Handhabung von Fördermedien wie beispielsweise Aggregat, Kohle, Kies oder dergleichen können Teile dieses Materials unerwünschter Weise zwischen Ober- und Untergurt geraten. Das Fördermedium wird von dem Untergurt mitgeschleppt und auf die Trag- und/oder Umlauftrommeln bzw. direkt auf die Spanntrommeln abgesetzt. Dadurch kann es zu Anbackungen und einer Beschädigung des Förderbandes bzw. des Trommelmantels kommen. Besteht das Fördermedium aus körnigen, eventuell scharfkantigen Materialien, werden aufgrund des Abriebs zwischen Bandtrommel und Förderband am Förderband Verletzungen in Form kleiner Risse hervorgerufen, wodurch das Förderband ebenfalls beschädigt werden kann.

Um solchen Problem zu begegnen kommen sogenannte selbstreinigende Bandtrommeln oder Riemenscheiben zum Einsatz. Aus der deutschen Offenlegungsschrift 26 39 873 ist eine selbstreinigende Riemenscheibe bekannt, die in Längsrichtung flexible Rippen aufweist, deren Zwischenräume zur Aufnahme und zum Abtransport von Fördermaterial ausgebildet sind. Die deutsche Patentschrift 305362 offenbart eine Bandtrommel für Förderbänder, die am Mantelumfang Aussparungen oder Schlitze aufweist, durch die beim Herumlaufen des Förderbandes um die Trommeln das auf den Untergurt gefallene Fördergurt durchfällt und durch eine nach außen schräg verlaufende Nabe geleitet und abgesondert wird. Weiterhin sind Bandtrommeln bekannt, bei denen der Trommelmantel durch in Abstand zueinander angeordnete Stäbe gebildet wird. Eine sogenannte Stabtrommeln ist zum Beispiel in der europäischen Patentanmeldung EP 0 290 728 A1offenbart. Für die Fertigung von solchen Stabtrommeln sind viele einzelne Fertigungsschritte notwendig, die einen enormen und kostenintensiven Arbeitsaufwand implizieren.

Es ist Aufgabe der vorliegenden Erfindung, eine Bandtrommel anzugeben, die gute selbstreinigende Eigenschaften aufweist und die einfach und kostengünstig herzustellen ist.

Diese Aufgabe wird von einer Bandtrommel mit den Merkmalen des Anspruchs 1 gelöst.

Danach ist eine Bandtrommel für Förderbänder mit einer Längsachse, einer entlang der Längsachse angeordneten Welle und einem konzentrisch zur Welle angeordneten Trommelmantel, wobei der Trommelmantel Öffnungen zum Durchlassen von Fördergut in einen von dem Trommelmantel umgebenen Innenraum aufweist, und mit einem ersten und einem zweiten Stopfen, die den Trommelmantel an einem ersten Ende und einem zweiten Ende jeweils mit der Welle verbinden, vorgesehen, wobei der Trommelmantel ausschließlich über den ersten und den zweiten Stopfen mit der Welle verbunden ist. Die erfindungsgemäße Bandtrommel ist besonders einfach und kostengünstig herzustellen. Eine zusätzliche Abstützung des Trommelmantels über sogenannte Stützringe ist nicht erforderlich.

Vorzugsweise sind die Öffnungen gleichmäßig entlang des Umfangs des Trommelmantels angeordnet. Dabei sind die Öffnungen bevorzugt von zwei unterschiedliche Arten von Ausnehmungen gebildet. Dabei ist eine der Ausnehmungen vorteilhafterweise quadratisch ausgeformt und so orientiert, dass sie mit ihrer Diagonalen parallel zur Längsachse angeordnet ist. Die zweite Ausnehmung ist vorzugsweise im Wesentlichen routenförmig mit einer längeren und einer kürzeren Diagonalen ausgebildet, wobei die wenigstens eine zweite Ausnehmung so orientiert ist, dass die längere Diagonale parallel zur Längsachse angeordnet ist.

In einer bevorzugten Ausführungsform sind die wenigstens eine erste Ausnehmung und die wenigstens eine zweite Ausnehmung jeweils in Reihen, die sich in Umfangsrichtung des Trommelmantels erstrecken, angeordnet. Dabei ist es vorteilhaft, wenn die Reihen der wenigstens einen ersten Ausnehmung zu den Reihen der wenigstens einen zweiten Ausnehmung in Umfangsrichtung versetzt angeordnet sind, wobei der Versatz in etwa dem halben Abstand zwischen zwei in Umfangsrichtung aufeinanderfolgenden Ausnehmungen entspricht.

In einer bevorzugten Ausführungsform ist die Welle zweiteilig ausgeformt und höchstens teilweise von dem Trommelmantel umgeben.

Es kann aber auch vorgesehen sein, dass die Welle einteilig ist und im Bereich des Trommelmantels wenigstens zum Teil als Spindel ausgestaltet ist.

Vorzugsweise ist der Trommelmantel im Wesentlichen ein zylindrisches Rohr. Es kann aber auch vorgesehen sein, dass der Trommelmantel rotationssymmetrisch und in Längsrichtung ballig ausgeformt ist.

Eine bevorzugte Ausführungsform der Erfindung wird nachfolgend anhand der Zeichnung näher erläutert. Es zeigt:

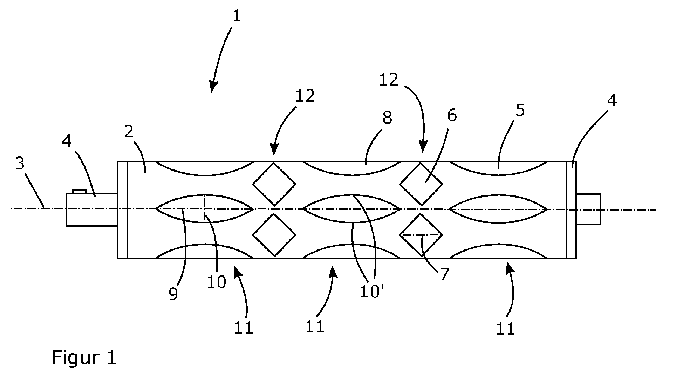

Fig. 1: eine räumliche Ansicht einer erfindungsgemäßen Bandtrommel.

In der Figur 1 ist eine Band- bzw. Spalttrommel 1 mit einem Trommelmantel 2 dargestellt. Der Trommelmantel 2 umgibt eine Welle mittig und in einer Längsrichtung 3 der Welle rotationssymmetrisch. Der Trommelmantel 2 besteht im Wesentlichen aus einem zylinderförmigen Rohr. Auf dem Trommelmantel 2 liegt das hier nicht dargestellte Förderband auf. Zur Verbindung des Trommelmantels 2 mit der Welle sind auf der Welle sitzend an den Enden des Trommelmantels Stopfen 4 vorgesehen. Der Trommelmantel 2 liegt mit seiner Innenseite zumindest teilweise auf der Außenseite der beiden Stopfen 4 auf und ist mit diesen verbunden. Dabei können die Stopfen 4 in den Trommelmantel 2 eingeschrumpft, eingeklebt oder mit diesem verschweißt sein.

Der Trommelmantel 2 weist Öffnungen 5 auf, durch die das vom Förderband zu entfernende Fördermedium in den Innenraum der Spann- bzw. Bandtrommel gelangt. Die Öffnungen 5 sind gleichmäßig über den Umfang des Trommelmantels 2 verteilt. Dabei weisen die Öffnungen ein besonders vorteilhaftes Muster aus zwei verschiedenartigen Ausnehmungen auf. Eine erste Ausnehmung 6 ist quadratisch ausgeformt und mit ihrer Diagonalen 7 parallel zur Längsrichtung 3 ausgerichtet. Eine zweite im Wesentlichen rautenförmige Ausnehmung 8 weist eine längere und eine kürzere Diagonale auf. Die zweite Ausnehmung 8 ist mit ihrer längeren Diagonalen 9 parallel zur Längsachse 3 orientiert. Die von der kürzeren Diagonale 10 verbunden Ecken 10' sind elliptisch abgerundet. Bei einer breiteren Trommel können auch mehr als drei Ausnehmungen vorgesehen sein.

Die zweiten Ausnehmungen 8 sind über den Trommelmantel 2 in drei zur Längsachse 3 beabstandeten Reihen 11 angeordnet, wobei jede Reihe 11 jeweils mehrere zweite Ausnehmungen 8 aufweist, die zueinander so angeordnet sind, dass die kürzeren Diagonalen 10 in Umfangsrichtung des Trommelmantels 2 zeigen. Die Reihen 11 der zweiten Ausnehmungen 8 sind dabei ohne Versatz zueinander orientiert. Zwischen den Reihen 11 aus zweiten Ausnehmungen 8 ist jeweils eine Reihe 12 aus ersten Ausnehmungen 6 angeordnet. Die ersten Ausnehmungen 6 sind dabei mit ihren Diagonalen 7 parallel zueinander in Umfangsrichtung des Trommelmantels 2 orientiert. Die Reihen 12 der ersten Ausnehmungen 6 sind zueinander ohne Versatz angeordnet.

Zwischen den zwei Reihen 12 der ersten Ausnehmungen 6 und den drei Reihen 11 der zweiten Ausnehmungen 8 ist ein Versatz in Umfangsrichtung des Trommelmantels 2 vorgesehen. Dabei liegt die Diagonale 7 der ersten Ausnehmung 6 etwa auf dem halben Abstand zwischen zwei in Umfangsrichtung aufeinanderfolgenden zweiten Ausnehmungen 8.

Die Diagonalen 7 der ersten Ausnehmungen 6 sind vorzugsweise kleiner als die Hälfte und größer als ein Drittel der längeren Diagonalen 9 der zweiten Ausnehmungen 8 dimensioniert. Weiterhin sind die Diagonalen 7 der ersten Ausnehmungen 6 bevorzugt in etwa so groß wie die kürzeren Diagonalen 10 der zweiten Ausnehmung 8 gewählt. In einer bevorzugten Ausführungsform weisen die Reihen 11, 12 der ersten und zweiten Ausnehmungen jeweils vier Ausnehmungen 6, 8 in Umfangsrichtung des Trommelmantels 2 auf. Bei einem größeren Durchmesser auch mehr als vier. Die Ausnehmungen 6, 8 erstrecken sich dabei gleichmäßig von dem einen Endbereich des Trommelmantels 2 bis zu dem anderen Endbereich des Trommelmantels 2.

Die durchgängige Welle kann im Bereich des Trommelmantels unterschiedliche Formen annehmen. Sie kann zum Beispiel als Spindel zum Austragen von Schmutz oder Schüttgut ausgeformt sein. Zudem kann auf der Welle im Inneren des Trommelmantels ein Austragsdoppelkegel vorgesehen sein, bei dem die großen senkrecht zur Welle stehenden Grundflächen der spiegelbildlich gegeneinander versetzten geraden Kreiskegelstümpfe im Wesentliche mit der Trommelmittelebene zusammenfallen. Dadurch kann ein Austrag des in den Innenraum der Trommel gelangten Fördermediums auf beiden Seiten der Spalttrommel erreicht werden.

In einer zweiten bevorzugten Ausführungsform ist die Welle nicht durchgängig bzw. nicht einteilig ausgeführt und die Stopfen 4 weisen einen Wellenansatz auf, der die Bandtrommel an ihren Enden mit dem jeweiligen Wellenteil verbindet.

In einer weiteren Ausführungsform kann vorgesehen sein, dass der Trommelmantel in Längsrichtung ballig bzw. zu den Enden hin gewölbt ausgeformt ist. Dies hat den Vorteil, dass das Förderband sich auf der Spalttrommel von selbst zentriert und ein Ablaufen des Förderbands von der Trommel verhindert wird.

Der Trommelmantel kann vorzugsweise auch erreicht werden, indem ein Blech zuerst mit den Öffnungen versehen wird und dann in einem darauffolgenden Schritt zu einem Rohr geformt wird.

Die Herstellung der erfindungsgemäßen Spalttrommel durch das bloße Ausformen der Öffnungen ist besonders einfach und kostengünstig. Die Öffnungen sind so gewählt, dass das Fördermedium zuverlässig ausgetragen wird und die Bandtrommel ohne zusätzliche Stützringe betreibbar ist.

## Patentansprüche

1. Bandtrommel (1) für Förderbänder mit einer Längsachse (3), einer entlang der Längsachse (3) angeordneten Welle und einem konzentrisch zur Welle angeordneten Trommelmantel (2), wobei der Trommelmantel (2) Öffnungen (5) zum Durchlassen von Fördergut in einen von dem Trommelmantel (2) umgebenen Innenraum aufweist, und mit einem ersten und einem zweiten Stopfen (4), die den Trommelmantel (2) an einem ersten Ende und einem zweiten Ende jeweils mit der Welle verbinden, **dadurch gekennzeichnet, dass** der Trommelmantel (2) ausschließlich über den ersten und den zweiten Stopfen (4) mit der Welle verbunden ist.

2. Bandtrommel (1) nach Anspruch 1, **dadurch gekennzeichnet, dass** die Öffnungen (5) gleichmäßig entlang des Umfangs des Trommelmantels (2) angeordnet sind.

3. Bandtrommel (1) nach Anspruch 1 oder 2, **dadurch gekennzeichnet, dass** die Öffnungen durch zwei unterschiedliche Arten von Ausnehmungen (6, 8) gebildet sind.

4. Bandtrommel (1) nach Anspruch 3, **dadurch gekennzeichnet, dass** wenigstens eine erste Ausnehmung (6) quadratisch ausgeformt ist und so orientiert ist, dass sie mit ihrer Diagonalen (7) parallel zur Längsachse (3) angeordnet ist.

5. Bandtrommel (1) nach einem der Ansprüche 3 oder 4, **dadurch gekennzeichnet, dass** wenigstens eine im Wesentlichen routenförmige zweite Ausnehmung (8) vorgesehen ist, aufweisend eine längere Diagonale (9) und eine kürzere Diagonale (10), wobei die wenigstens eine zweite Ausnehmung (8) so orientiert ist, dass die längere Diagonale (9) parallel zur Längsachse (3) angeordnet ist.

6. Bandtrommel (1) nach einem der vorhergehenden Ansprüche 3 bis 5, **dadurch gekennzeichnet, dass** die wenigstens eine erste Ausnehmung (6) und die wenigstens eine zweite Ausnehmung (8) jeweils in Reihen (11, 12), die sich in Umfangsrichtung des Trommelmantels erstrecken, angeordnet sind.

7. Bandtrommel (1) nach Anspruch 6, **dadurch gekennzeichnet, dass** die Reihen (11) der wenigstens einen ersten Ausnehmung (6) und die Reihen (12) der wenigstens einen zweiten Ausnehmung (8) gegeneinander in Umfangsrichtung versetzt angeordnet sind, wobei der Versatz in etwa dem halben Abstand zwischen zwei in Umfangsrichtung aufeinanderfolgenden Ausnehmungen (6, 8) entspricht.

8. Bandtrommel (1) nach einem der vorhergehenden Ansprüche, **dadurch gekennzeichnet, dass** die Welle zweiteilig ist und höchstens teilweise von dem Trommelmantel (2) umgeben ist.

9. Bandtrommel (1) nach einem der vorhergehenden Ansprüche 1 bis 8, **dadurch gekennzeichnet, dass** die Welle einteilig ist und im Bereich des Trommelmantels (2) wenigstens zum Teil als Spindel ausgestaltet ist.

10. Bandtrommel (1) nach einem der vorhergehenden Ansprüche, **dadurch gekennzeichnet, dass** der Trommelmantel (2) im Wesentlichen ein zylindrisches Rohr ist.

11. Bandtrommel (1) nach einem der vorhergehenden Ansprüche 1 bis 9, **dadurch gekennzeichnet, dass** der Trommelmantel (2) rotationssymmetrisch und in Längsrichtung ballig ausgeformt ist.
